# EUROPÄISCHE PATENTSCHRIFT

(11) **EP 1 648 732 B1**
(45) Veröffentlichungstag und Bekanntmachung des Hinweises auf die Patenterteilung: **20.12.2006**
(21) Anmeldenummer: 04763379.7
(22) Anmeldetag: 20.07.2004
(51) Int. Cl.: B60K 23/08

(54) **STEUERVORRICHTUNG FÜR EIN ZUMINDEST ZEITWEISE VIERRADGETRIEBENES KRAFTFAHRZEUG**
CONTROL DEVICE FOR AN AT LEAST PART-TIME FOUR-WHEEL DRIVE MOTOR VEHICLE
DISPOSITIF DE COMMANDE POUR UN VEHICULE AUTOMOBILE ROULANT, AU MOINS TEMPORAIREMENT, A TRANSMISSION QUATRE ROUES

(30) Priorität: 24.07.2003 DE 10333652
(43) Veröffentlichungstag der Anmeldung: 26.04.2006
(73) Patentinhaber: Bayerische Motoren Werke Aktiengesellschaft, 80809 München (DE)
(72) Erfinder: BILLIG, Christian, 80939 München (DE)
(86) Internationale Anmeldenummer: PCT/EP2004/008148
(87) Internationale Veröffentlichungsnummer: WO 2005/009776

(56) Entgegenhaltungen:
- EP-A- 1 415 850
- US-A- 5 957 985
- US-A1- 2002 035 003
- US-A1- 2002 107 628

## Beschreibung

Die Erfindung bezieht sich auf eine Steuervorrichtung für ein zumindest zeitweise vierradgetriebenes Kraftfahrzeug nach dem Oberbegriff des Patentanspruchs 1.

Eine derartige Steuervorrichtung ist beispielsweise aus der nachveröffentlichten EP 1 415 850 A2 bekannt.

Eine weitere Steuervorrichtung ist beispielsweise in der DE 100 54 023 A1 beschrieben. Bekannt ist demnach eine Drehmomentverteilungseinrichtung zum Verändern des Drehmomentverteilungsverhältnisses zwischen den Rädern der Vorderachse und den Rädern der Hinterachse durch entsprechende Steuerung einer Reibungskupplung als Längssperre (Übertragungskupplung).

Im Folgenden werden diesbezüglich verallgemeinernd als primäre Antriebsräder die permanent mit der Antriebseinheit verbundenen Räder und als sekundäre Antriebsräder die über die Übertragungskupplung bedarfsweise mit der Antriebseinheit verbindbaren Räder bezeichnet.

Bei den bekannten Steuervorrichtungen ist meist für die Steuerung bzw. Regelung der Drehmomentverteilung bzw. des Kupplungsmoments an der Übertragungskupplung nur eine Steuereinheit bekannt, die sowohl das Soll-Kupplungsmoment berechnet als auch das berechnete Soll-Kupplungsmoment in ein elektrisches Ansteuersignal für die Aktuatorvorrichtung der Übertragungskupplung umsetzt.

Aus der EP 1 415 850 A2 geht zwar generell der Einsatz von zwei Steuereinheiten im weiteren Sinne hervor, wobei die zweite "Steuereinheit" lediglich einen nicht näher definierten Stromsteuerkreis darstellt.

Es ist Aufgabe der Erfindung, ein Steuersystem eingangs genannter Art im Hinblick auf die Genauigkeit der Regelung bei gleichzeitiger Aufwand- und Kostenreduzierung zu verbessern.

Diese Aufgabe wird durch die Merkmale des Patentanspruchs 1 gelöst. Vorteilhafte Weiterbildungen sind die Gegenstände der abhängigen Patentansprüche.

Der Erfindung liegt die Erkenntnis zugrunde, dass eine körperliche Aufteilung der Steuereinheit in eine masterähnliche Hauptsteuereinheit und in eine Zusatzsteuereinheit in Form einer intelligenten Endstufe insbesondere folgende Vorteile bietet:

Durch die Verwendung von Eingangssignalen und physikalischen Modellen, die auch für andere Fahrdynamikregelfunktionen ohnehin üblicherweise bereits in bestimmten Kraftfahrzeugsystemen vorliegen, als Parameter in der Hauptsteuereinheit kann eine uneingeschränkt genaue fahrdynamische Fahrperformance zur Verfügung gestellt werden. Dies ist ohne zusätzlichem Aufwand möglich, wenn die Hauptsteuereinheit in einem Steuergerät integriert ist, das für andere Fahrdynamikregelsysteme bereits vorgesehen ist. Besonders vorteilhaft hierfür ist das elektronische Steuergerät für Bremsregelfunktionen (z.B. bekannt unter den Abkürzungen ABS/ASC, DSC, FDR).

Weiterhin ist durch mögliche Redundanzen eine Verbesserung von Notlaufeigenschaften möglich.

In der Zeichnung ist ein Ausführungsbeispiel der Erfindung dargestellt. Es zeigt
- Fig. 1: schematisch ein zeitweise vierradgetriebenes Fahrzeug mit einer über eine Hauptsteuereinheit und eine Zusatzsteuereinheit einstellbaren Übertragungskupplung am Beispiel eines grundsätzlich hinterradangetriebenen Kraftfahrzeugs mit über eine Übertragungskupplung zuschaltbarem Vorderradantrieb
- Fig. 2: eine mögliche Darstellung der Aufgabenverteilung zwischen der Hauptsteuereinheit und der Zusatzsteuereinheit.

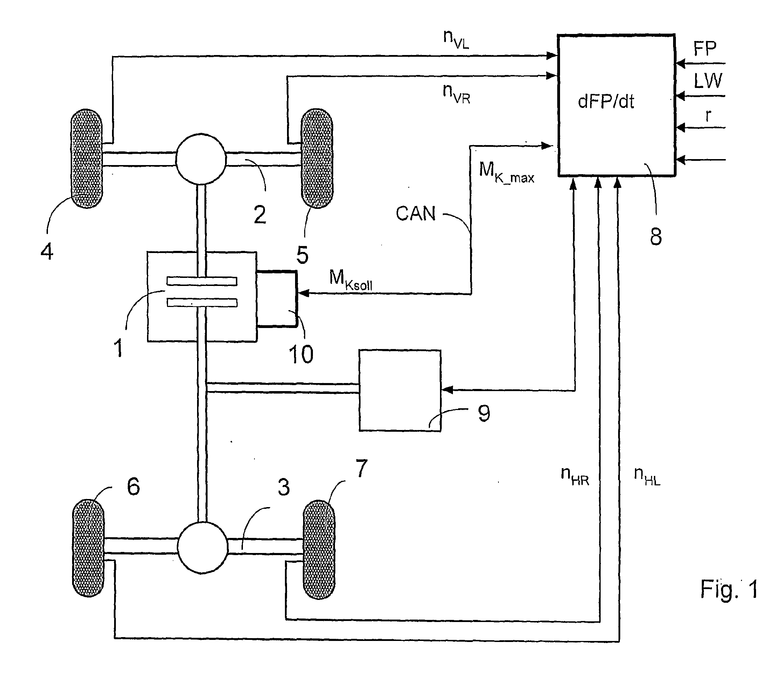

In Figur 1 ist ein zeitweise vierradgetriebenes Fahrzeug in Form eines grundsätzlich hinterradangetriebenen Kraftfahrzeugs mit bedarfsweise über eine Übertragungskupplung 1 zuschaltbarem Vorderradantrieb dargestellt. Die Übertragungskupplung 1 ist über eine Steuereinheit, bestehend aus einer Hauptsteuereinheit 8 und einer Zusatzsteuereinheit 10, einstellbar. Die Zusatzsteuereinheit 10 ist räumlich von der Hauptsteuereinheit 8 getrennt und in der Nähe der Übertragungskupplung 1 angeordnet.

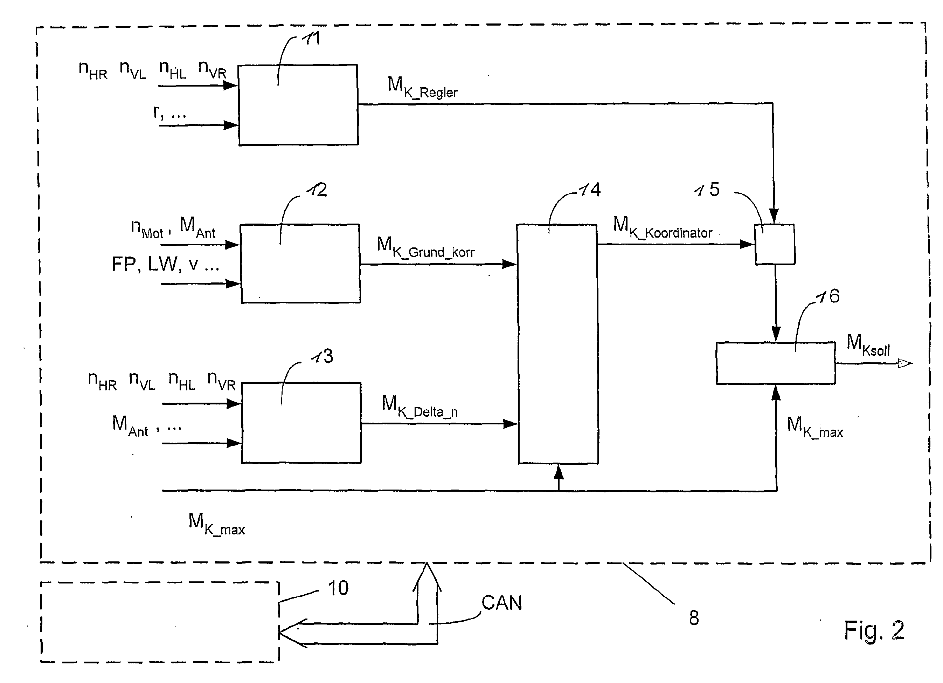

Die Hauptsteuereinheit 8, die vorzugsweise Teil eines elektronischen Fahrdynamikregel-Steuergeräts (z. B. DSC von BMW) ist, berechnet abhängig von im Steuergerät erfassten und/oder ermittelten Parametern ein Soll-Kupplungsmoment M_{Ksoll} (vgl. auch Fig. 2). Das Soll-Kupplungsmoment M_{Ksoll} wird über den bekannten Fahrzeug-Datenbus CAN an die Zusatzsteuereinheit 10 weitergeleitet. Die Zusatzsteuereinheit 10 setzt das Soll-Kupplungsmoment M_{Ksoll} in ein entsprechendes elektrisches Ansteuersignal für die Aktuatorvorrichtung um (z. B. in ein Stromsignal für einen mit der Übertragungskupplung 1 verbundenen Elektromotor).

Über den Datenbus CAN erhält die Zusatzsteuereinheit 10 weitere Eingangsgrößen, mittels der sie bei einem definierten Fehler eine Notlauffunktion durchführen kann.

Bei einem Fahrzeug nach Fig. 1 wird mit offener Übertragungskupplung 1 das gesamte Drehmoment (Antriebsmoment) der Antriebseinheit 9 auf die Räder 6 und 7 der Hinterachse 3 übertragen. Vorzugsweise besteht die Antriebseinheit 9 aus einer Brennkraftmaschine, einem Getriebe und mindestens einem Antriebssteuergerät (hier nicht näher dargestellt). Das Antriebssteuergerät kommuniziert beispielsweise auch über den bekannten Datenbus CAN mit der Hauptsteuereinheit 8 und der Zusatzsteuereinheit 10. In Fig. 1 sind die Hinterräder 6 und 7 die primären Antriebsräder, da sie permanent mit der Antriebseinheit 9 verbunden sind. Mit zunehmendem Kupplungsmoment an der Übertragungskupplung 1 treibt die Antriebseinheit 9 auch die Räder 4 und 5 der Vorderachse 2 an. Somit sind die Vorderräder 4 und 5 die sekundären Antriebsräder.

Die Hauptsteuereinheit 8 erfasst oder ermittelt beispielsweise folgende Parameter (vgl. auch Fig. 2) zur Ermittlung des Soll-Kupplungsmoments M_{Ksoll}:

Die Fahrpedalstellung FP, die Geschwindigkeit der Gaspedalbetätigung dFP/dt, die Motordrehzahl n_{Mot}, das Motormoment (=Brennkraftmaschinen-Drehmoment) oder das Antriebsmoment M_{Ant} (=getriebeausgangsseitiges Kardanwellendrehmoment), den Lenkwinkel LW, die Gierrate bzw. Gierwinkelgeschwindigkeit r sowie die Raddrehzahlen n_{VL}, n_{HL}, n_{VR}, n_{HR} aller Räder 4, 5, 6, 7. Aus diesen Raddrehzahlen n_{VL}, n_{HL}, n_{VR}, n_{HR} werden im Zusammenhang mit weiteren in der Hauptsteuereinheit 8 vorliegenden Informationen, die Radgeschwindigkeiten V_{VL}, V_{HL}; V_{VR}, V_{HR} aller Räder 4, 5, 6, 7 sowie die Fahrzeuggeschwindigkeit vermittelt.

In Fig. 2 sind weitere Details der Hauptsteuereinheit 8 und deren Zusammenspiel mit der Zusatzsteuereinheit 10 gezeigt.

In der Hauptsteuereinheit 8 wird mittels der Reglereinheit 11 unter Berücksichtigung von Radschlupf und fahrdynamischen Größen, wie Übersteuern und Untersteuern, ein fahrdynamischer Regelanteil M_{K_Regler} für die Bestimmung des Soll-Kupplungsmoments M_{Ksoll} ermittelt.

In der Vorsteuereinheit 12 wird ein korrigierter Grundvorsteueranteil M_{K_Grund_korr} ermittelt und vorzugsweise an eine Koordinatoreinheit 14 ausgegeben. In einer Blindmomentermittlungseinheit 13 kann ein radschlupfbezogenes Blindmoment M_{K_Delta_n} ermittelt werden und ebenfalls an die Koordinatoreinheit 14 ausgegeben werden. Unter Blindmomenten werden Störmomente verstanden, die zu einer Verspannung des Antriebsstranges führen können, z. B. durch unterschiedliche Reifenumfänge. Das Blindmoment M_{K_Delta_n} wird vorzugsweise abhängig von den Radgeschwindigkeiten, dem Motor- oder Antriebsmoment, dem Fahrzeuggewicht und Reifentoleranzfaktoren ermittelt. Die Blindmomentermittlungseinheit 13 und/oder die Koordinatoreinheit 14 sind lediglich vorteilhafte Weiterbildungen. Die Vorsteuereinheit 12 kann auch direkt mit dem Addierer 15 verbunden sein.

Das Ausgangsmoment M_{K_Koordinator} der Koordinatoreinheit 14, das meistens gleich dem korrigierten Grundvorsteueranteil M_{K_Grund_korr} entspricht, wird zum Addierer 15 weitergeleitet. Im Addierer 15 findet die Summierung des Ausgangsmoments M_{K_Koordinator} der Koordinatoreinheit 14 mit dem fahrdynamischer Regelanteil M_{K_Regler} statt. In der Ausgabeeinheit 16 wird das tatsächlich einzustellende Soll-Kupplungsmoment M_{Ksoll} endgültig bestimmt und an das Zusatzsteuergerät 10 ausgegeben.

Das einzustellende Soll-Kupplungsmoment M_{Ksoll} wird von der Steuereinheit 8 grundsätzlich durch Summierung des korrigierten Grundvorsteueranteils M_{K_Grund_korr} (Norm-Vorsteuerung) mit einem fahrdynamischen Regelanteil M_{K_Regler} ermittelt, wenn nicht z. B. durch die Koordinatoreinheit 14 oder durch die Ausgabeeinheit 16 eine andere Vorschrift höhere Priorität gewinnt. Die Ausgabeeinheit 16 erhält über den Datenbus CAN vom Zusatzsteuergerät 10 als Eingangssignal ein durch den Belastungsgrad der Aktuatorvorrichtung vorgegebenes maximal zulässiges Begrenzungsmoment M_{K_max}. Hierzu liegt im Zusatzsteuergerät 10 ein mathematischen Verlustleistungsmodell vor, das insbesondere den Belastungsgrad der Aktuatorvorrichtung (z.B. Elektromotor) und der Öl-Lamellen der Übertragungskupplung 1 berücksichtigt. Dieses Begrenzungsmoment M_{K_max} kann auch in der Koordinatoreinheit 14 berücksichtigt werden.

## Patentansprüche

1. Steuervorrichtung für ein zumindest zeitweise vierradgetriebenes Kraftfahrzeug mit einer Steuereinheit (8,10), mittels der das Antriebsmoment einer Antriebseinheit (9) auf primäre Antriebsräder (6, 7), die permanent mit der Antriebseinheit (9) verbunden sind, und auf sekundäre Antriebsräder (4, 5), die bedarfsweise über eine Übertragungskupplung (1) mit der Antriebseinheit (9) verbindbar sind, variabel verteilbar ist, indem die Steuereinheit (8, 10) ein Soll-Kupplungsmoments ermittelt, das mittels einer Aktuatorvorrichtung an der Obertragungskupplung (1) einzustellen ist, wobei die Steuereinheit aus einer Hauptsteuereinheit (8) und einer Zusatzsteuereinheit (10) besteht, wobei die Hauptsteuereinheit (8) abhängig von erfassten und/oder ermittelten Parametern das Soll-Kupplungsmoment (M_{Ksoll}) berechnet, das an die Zusatzsteuereinheit (10) weitergeleitet wird, und wobei die Zusatzsteuereinheit (10) das Soll-Kupplungsmoment (M_{Ksoll}) in ein entsprechendes elektrisches Ansteuersignal für die Aktuatorvorrichtung umsetzt, **dadurch gekennzeichnet, dass** die Zusatzsteuereinheit (10) räumlich von der Hauptsteuereinheit (8) getrennt ist, und in der Nähe der Übertragungskupplung (1) angeordnet ist, und dass die Zusatzsteuereinheit (10) weitere Eingangsgrößen erhält, mittels der sie bei einem definierten Fehler eine Notlauffunktion durchführen kann.

2. Steuervorrichtung nach Anspruch 1, **dadurch gekennzeichnet, dass** die Hauptsteuereinheit (8) in einem Steuergerät integriert ist, das auch für andere Fahrdynamikregelfunktionen vorgesehen ist.

3. Steuervorrichtung nach Anspruch 1, **dadurch gekennzeichnet, dass** die Hauptsteuereinheit (8) und die Zusatzsteuereinheit (10) über einen Datenbus (CAN) miteinander verbunden sind.

## Claims

1. A control device for a motor vehicle, which is at least occasionally four-wheel drive, comprising a control unit (8, 10), by means of which the drive torque of a drive unit (9) can be variably distributed to primary drive wheels (6, 7), which are permanently connected to the drive unit (9) and to secondary drive wheels (4, 5), which can be connected, if required, via a transfer clutch (1), to the drive unit (9), in that the control unit (8, 10) determines a desired clutch torque, which is to be adjusted by means of an actuator device at the transfer clutch (1), the control unit comprising a main control unit (8) and an additional control unit (10), the main control unit (8) calculating, depending on the detected and/or determined parameters, the desired clutch torque (M_{K desired}), which is passed to the additional control unit (10), and the additional control unit (10) converting the desired clutch torque (M_{K} desired) into a corresponding electrical control signal for the actuator device, **characterised in that** the additional control unit (10) is spatially separated from the main control unit (8) and is arranged in the vicinity of the transfer clutch (1), and **in that** the additional control unit (10) receives further input variables, by means of which it can carry out an emergency running function in the event of a defined defect.

2. A control device according to claim 1, **characterised in that** the main control unit (8) is integrated in a control apparatus, which is also provided for other driving dynamic control functions.

3. A control device according to claim 1, **characterised in that** the main control unit (8) and the additional control unit (10) are connected to one another via a data bus (CAN).

## Revendications

1. Dispositif de commande d'un véhicule automobile dont les quatre roues sont entraînées au moins temporairement, comprenant une unité de commande (8, 10) au moyen de laquelle le couple d'entraînement d'une unité d'entraînement (9) peut être réparti de façon variable sur des roues d'entraînement primaires (6, 7) reliées en permanence à l'unité d'entraînement (9), et sur des roues d'entraînement secondaires (4, 5) qui peuvent être reliées en cas de besoin par un embrayage de transmission (1) à l'unité d'entraînement (9), l'unité de commande (8, 10) déterminant un couple d'embrayage de consigne à régler au moyen d'un dispositif d'actionnement sur l'embrayage de transmission (1), l'unité de commande étant composée d'une unité de commande principale (8) et d'une unité de commande complémentaire (10), l'unité de commande principale (8) calculant en fonction de paramètres détectés et/ou déterminés le couple d'embrayage de consigne (M_{Kcons}) transmis à l'unité de commande complémentaire (10), et l'unité de commande complémentaire (10) convertissant le couple d'embrayage de consigne (M_{Kcons}) en un signal de commande électrique correspondant pour le dispositif d'actionnement,
**caractérisé en ce que**
l'unité de commande complémentaire (10) est séparée de l'unité de commande principale (8) et disposée à proximité de l'embrayage de transmission (1), et l'unité de commande complémentaire (10) reçoit d'autres grandeurs d'entrée au moyen desquelles elle peut assurer un fonctionnement exceptionnel en cas d'urgence lorsqu'un défaut a été défini.

2. Dispositif de commande selon la revendication 1,
**caractérisé en ce que**
l'unité de commande principale (8) est intégrée dans un appareil de commande également prévu pour d'autres fonctions de régulation de la dynamique de conduite.

3. Dispositif de commande selon la revendication 1,
**caractérisé en ce que**
l'unité de commande principale (8) et l'unité de commande complémentaire (10) sont reliées l'une à l'autre par un bus de données (CAN).
